# EUROPÄISCHE PATENTSCHRIFT

(11) **EP 1 134 442 B1**
(45) Veröffentlichungstag und Bekanntmachung des Hinweises auf die Patenterteilung: **27.07.2005**
(21) Anmeldenummer: 01102037.7
(22) Anmeldetag: 30.01.2001
(51) Int. Cl.: F16C 19/54

(54) **Radial-Axial-Lagereinheit**
Radial axial bearing unit
Ensemble palier à contact radial et axial

(30) Priorität: 15.03.2000 DE 10012649
(43) Veröffentlichungstag der Anmeldung: 19.09.2001
(73) Patentinhaber: INA-Schaeffler KG, 91074 Herzogenaurach (DE)
(72) Erfinder: Döppling, Wolfgang, 91086 Aurachtal (DE); Schneider, Daniel, 91096 Möhrendorf (DE)

(56) Entgegenhaltungen:
- DE-C- 966 513
- FR-A- 2 023 980
- GB-A- 1 175 109
- US-A- 1 351 754

## Beschreibung

### Anwendungsgebiet der Erfindung

Die Erfindung betrifft eine Radial-Axial-Lagereinheit mit einem Radialkräfte aufnehmenden, wenigstens einen Außenring aufweisenden Zylinderrollenlager und einem Axialkräfte aufnehmenden Kugellager, wobei die Zylinderrollen und die Lagerkugeln in je einem Käfig geführt sind.

### Hintergrund der Erfindung

Eine solch kombinierte Lagereinheit ist aus dem INA-Katalog 307 "Nadellager, Zylinderrollenlager" vorbekannt. Auf Seite 162 ist ein Radial-Axial-Lager der Baureihe NKX gezeigt, dessen Radiallager als ein Zylinderrollenlager und dessen Axiallager als ein Kugellager ausgebildet sind, wobei beide Wälzkörperreihen in je einem Käfig geführt sind. Der Außenring des Radiallagers ist mit einer Laufscheibe des Axiallagers einstückig verbunden.

Nachteilig dabei ist, dass ein solches Lager in einem Planetenradsatz nicht eingesetzt werden kann, weil die aus der Bewegung der Planetenräder um die Zentralachse resultierenden Radialkräfte durch das Axialkugellager nicht aufgenommen werden können. Dieser Nachteil wird bei einer nicht achsparallelen Anordnung der Planetenräder zur Zentralachse noch größer. Beim als Radiallager wirkenden Zylinderrollenlager kann der Käfig an Umgebungsbauteilen schleifend anliegen und so verschleißen. Dieser durch die Zylinderrollen geführte Lagerkäfig kann auch bei hohen Drehzahlen durch die Fliehkraft aufgeweitet und ggf. zerstört werden. Außerdem behindert der durch die Wälzkörper geführte Lagerkäfig das einwandfreien Abrollen der Zylinderrollen.

### Zusammenfassung der Erfindung

Der Erfindung liegt die Aufgabe zu Grunde, ein gattungsgemäßes Radial-Axial-Lager zu entwickeln, das insbesondere bei hohen Drehzahlen in zum Sonnenrad schräg gestellten Planetenradanordnungen hohe Kräfte aufnehmen kann und durch seine konstruktionsbedingte Bauart weniger verschleißanfällig ist.

Erfindungsgemäß wird diese Aufgabe nach dem kennzeichnenden Teil von Anspruch 1 dadurch gelöst, dass das Kugellager als ein Schrägkugellager ausgebildet ist, dessen Außenring an seinem radial innenliegenden Ende einen axial gerichteten Kragen aufweist, der eine erste Anlagefläche für eine Stirnseite der Zylinderrollen bildet und das Zylinderrollenlager eine Anlaufscheibe aufweist, die mit ihrem Radialteil unmittelbar an der Stirnfläche des Außenringes anliegt und deren axialgerichteter Kragen eine zweite Anlagefläche für die andere Stirnseite der Zylinderrollen bildet.

Vorteilhafte Weiterbildungen der Erfindung sind in den Unteransprüchen 2 bis 8 beschrieben.

So ist nach Anspruch 2 vorgesehen, dass die Stirnseiten der Zylinderrollen ballig ausgeführt sind und diese im Teilkreisbereich an den axial gerichteten Kragen anliegen. Durch diese Anordnung ist sichergestellt, dass die Reibungsverluste des als Radiallager wirkenden Zylinderrollenlagers wesentlich gesenkt sind. Durch die ballige Ausbildung der Zylinderrollen ergibt sich eine sehr geringe Anlagefläche zwischen Kragen und Stirnseiten der Zylinderrollen und durch die Anordnung der Berührung im Teilkreisbereich ergibt sich eine sehr geringe relative Bewegung der beiden Teile zueinander.

Nach einem weiteren Merkmal der Erfindung gemäß Anspruch 3 soll der Käfig des Radiallagers durch dessen Außenlaufbahn geführt sein. Auf diese Weise ist sichergestellt, dass zwischen Käfig und Außenlaufbahn eine große Führungsfläche existiert, so dass der Käfig auch bei hohen Drehzahlen durch die auftretenden großen Fliehkräfte nicht beschädigt werden kann. Außerdem behindert ein derart ausgestalteter Käfig nicht das Abwälzen der Zylinderrollen, da er durch seine Führungsart nur als Trennungsglied zwischen den einzelnen Zylinderrollen wirkt.

Nach Anspruch 4 sollen die Lagerringe des Schrägkugellagers in ihrer axialen Ausdehnung derart begrenzt sein, dass zwischen ihnen ein die Lagerkugeln aufnehmender Scheibenkäfig anordenbar ist, wobei nach Anspruch 5 die Taschen dieses Scheibenkäfigs eine solche Geometrie aufweisen sollen, dass ein ungehindertes Abwälzen der Lagerkugeln ermöglicht ist. Darüber ist nach Anspruch 6 vorgesehen, dass der Scheibenkäfig auf einer Welle geführt ist und er mit Schmiertaschen in Form von Einprägungen oder Durchbrüchen gemäß Anspruch 7 ausgestaltet ist.

Schließlich geht aus Anspruch 8 hervor, dass die erfindungsgemäße Radial-Axial-Lagereinheit besonders vorteilhaft in einem Planetenradsatz zur Lagerung von Planeten eingesetzt ist, deren Achsen gegenüber einer Zentralachse entweder parallel oder unter einem Winkel verlaufen.

Die Erfindung wird an nachstehendem Ausführungsbeispiel näher erläutert.

### Kurze Beschreibung der Zeichnungen

Es zeigen:
- Figur 1: einen Längsschnitt durch ein erfindungegemäßes Lager,
- Figur 2: eine Draufsicht auf einen Scheibenkäfig und
- Figur 3: ein Anwendungsbeispiel der erfindungsgemäßen Lagerung

### Ausführliche Beschreibung der Zeichnungen

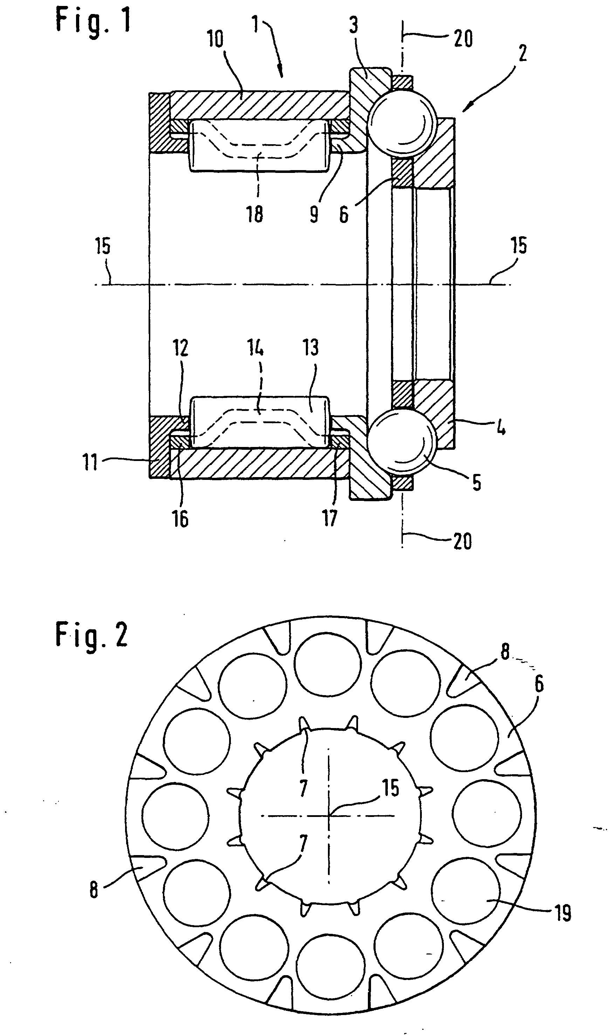

Die in Figur 1 gezeigte Radial-Axial-Lagereinheit besteht aus dem Zylinderrollenlager 1 und dem Schrägkugellager 2, deren gemeinsame Rotationsachse mit 15 bezeichnet ist. Das Schrägkugellager 2 besteht aus dem Lageraußenring 3 und dem Lagerinnenring 4 zwischen denen auf zugehörigen Laufbahnen im Scheibenkäfig 6 geführte Lagerungen 5 abrollen. Der Lageraußenring 3 und der Lagerinnenring 4 sind in ihrer axialen Ausdehnung so aufeinander abgestimmt, dass zwischen beiden der Scheibenkäfig 6 anordenbar ist. Dies bedeutet, die beiden Lagerringe 3, 4 erstrecken sich in axialer Richtung nicht bis in die durch die Lagerkugeln 5 gelegte radiale Mittelebene 20.

Wie aus Figur 2 ersichtlich, ist der Scheibenkäfig 6 mit Taschen 19 zur Aufnahme der Lagerkugeln 5 versehen. Diese sind gegenüber den Lagerkugeln 5 in ihrer Geometrie so vergrößert ausgeführt, so dass bei Rotation des Schrägkugellagers 2 die Lagerkugeln 5 ihre durch unterschiedliche Anlage an den Laufbahnen bedingte eliptische Umfangsbewegung ungehindert ausführen können. Der Scheibenkäfig 6 ist mit seiner Innenbohrung auf einer nicht dargestellten Welle geführt, d. h. er dient lediglich zur Trennung der Lagerkugeln 5 und behindert deren Abwälzbewegung nicht. Weiter ist der Scheibenkäfig 6 mit Durchbrüchen 8 an seinem äußeren radialen Umfang oder mit Einprägungen 7 an seinem inneren radialen Umfang ausgestattet, so dass die Schmierung des Schrägkugellagers 2 wesentlich verbessert ist. Wie der Figur 1 weiter entnehmbar, ergeben sich für den Scheibenkäfig 6 neben der Welle noch Reibungsflächen mit dem radial innenliegenden Teil des Lagerinnenringes 4 und dem radial außenliegenden Teil des Lageraußenringes 3, d. h. er kann sich an diesen Flächen abstützen.

Die Zylinderrollen 13 des Zylinderrollenlagers 1 wälzen einerseits auf der Mantelfläche der nicht gezeigten Welle und andererseits auf der inneren Umfangsfläche des Lageraußenringes 10 ab. Zum Lager gehören weiterhin die linksseitig angeordnete Anlaufscheibe 11 mit ihrem radial nach innen gerichteten Kragen 12 und der ebenfalls radial nach innen gerichtete Kragen 9 des Lageraußenringes 3 vom Schrägkugellager 2. Die Zylinderrollen 13 sind an ihren beiden Stirnseiten ballig ausgeführt, so dass eine geringe Reibungsfläche zwischen Zylinderrolle 13 und den beiden Kragen 12 und 9 gegeben ist. Außerdem sind die Kragen 12 und 9 in radialer Richtung so gelegt, dass sie sich im Bereich des Teilkreises mit den Zylinderrollen 13 berühren. Auch auf diese Weise ist die Reibung aufgrund der geringen relativen Bewegung der Teile zueinander nochmals verringert. Der Käfig 14 des Zylinderrollenlagers 1 besteht aus den beiden Seitenringen 16 und 17, die durch Stege 18 miteinander verbunden sind, so dass Zylinderrollen 13 aufnehmende Taschen gebildet sind. Die Stege 18 des Käfigs 14 sind radial nach innen durchgekröpft und weisen eine Anlagefläche am äußeren Laufring 10 auf, die einerseits von den beiden Seitenringen 16 und 17 und andererseits von einem parallel zur Lagerachse 15 verlaufenden Teilstück des Steges 18 gebildet ist. Auf diese Weise ist eine relativ große Anlagefläche zwischen Käfig 14 und Lageraußenring 10 gegeben, so dass dieser und die Außenlaufbahn auch bei starken Kräften, die durch eine hohe Umdrehungszahl entstehen, nicht beschädigt werden können.

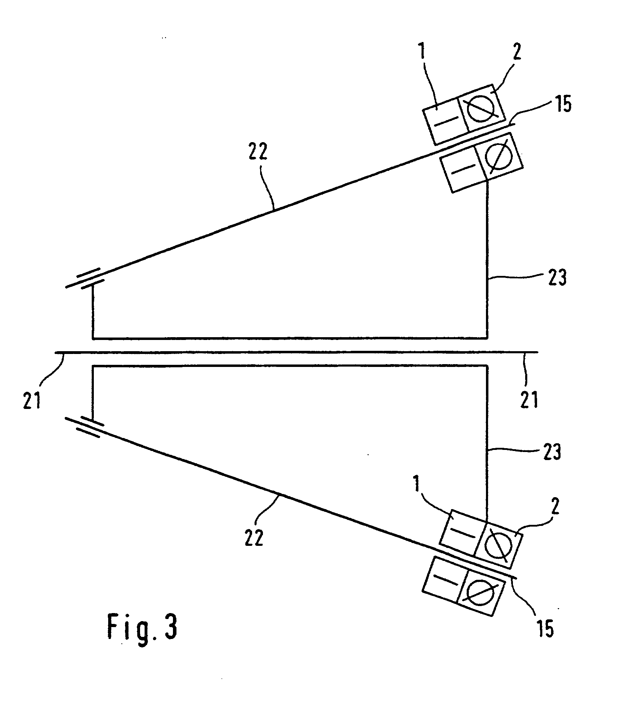

Schließlich ist in Figur 3 in schematischer Darstellung eine erfindungsgemäße Radial-Axial-Lagereinheit gezeigt, die in einem Planetenradsatz zur Lagerung von Planeten 22 innerhalb eines Planetenträgers 23 eingesetzt ist. Das Spezifische dieser Lösung liegt darin, dass die Rotationsachsen 15 der Planeten 22 gegenüber der Zentralachse 21 des Planetenradsatzes unter einem Winkel, d. h. nicht achsparallel zueinander verlaufen. Wird ein solcher Planetenradsatz in der beschriebenen schrägen Anordnung verbaut und mit hohen Drehzahlen betrieben, so sind zur Aufnahme der hohen radialen und axialen Kräfte die erfindungsgemäßen kombinierten Radial-Axial-Lagereinheiten aufgrund einer robusten Bauweise vorteilhaft einsetzbar.

### Bezugszeichen

- 1: Zylinderrollenlager
- 2: Schrägkugellager
- 3: Lageraußenring
- 4: Lagerinnenring
- 5: Lagerkugel
- 6: Scheibenkäfig
- 7: Einprägung
- 8: Durchbruch
- 9: Kragen
- 10: Außenring
- 11: Anlaufscheibe
- 12: Kragen
- 13: Zylinderrolle
- 14: Käfig
- 15: Achse
- 16: Seitenring
- 17: Seitenring
- 18: Steg
- 19: Tasche
- 20: Mittelebene
- 21: Zentralachse
- 22: Planet
- 23: Planetenträger

## Patentansprüche

1. Radial-Axial-Lagereinheit mit einem Radialkräfte aufnehmenden, wenigstens einen Außenring (10) aufweisenden Zylinderrollenlager (1) und einem Axialkräfte aufnehmenden Kugellager, wobei die Zylinderrollen (13) und die Lagerkugeln (5) in je einem Käfig geführt sind, **dadurch gekennzeichnet, dass** das Kugellager als ein Schrägkugellager (2) ausgebildet ist, dessen Außenring (3) an seinem radial innen liegenden Ende einen axial gerichteten Kragen (9) aufweist, der eine erste Anlagefläche für eine Stirnseite der Zylinderrollen (13) bildet und das Zylinderrollenlager (1) eine Anlaufscheibe (11) aufweist, die mit ihrem Radialteil unmittelbar an der Stirnfläche des Außenringes (10) anliegt und deren axial gerichteter Kragen (12) eine zweite Anlagefläche für die andere Stirnseite der Zylinderrollen (13) bildet.

2. Radial-Axial-Lagereinheit nach Anspruch 1, **dadurch gekennzeichnet, dass** die Stirnseiten der Zylinderrollen (13) ballig ausgeführt sind und diese im Teilkreisbereich an den axial gerichteten Kragen (9, 12) anliegen.

3. Radial-Axial-Lagereinheit nach Anspruch 1, **dadurch gekennzeichnet, dass** der Käfig (14) des Zylinderrollenlagers (1) durch dessen Außenlaufbahn geführt ist.

4. Radial-Axial-Lagereinheit nach Anspruch 1, **dadurch gekennzeichnet, dass** die Lagerringe (3, 4) des Schrägkugellagers (2) in ihrer axialen Ausdehnung derart begrenzt sind, so dass zwischen ihnen ein die Lagerkugeln (5) aufnehmbarer Scheibenkäfig (6) anordenbar ist.

5. Radial-Axial-Lagereinheit nach Anspruch 4, **dadurch gekennzeichnet, dass** Taschen (19) des Scheibenkäfigs (6) eine solche Geometrie aufweisen, so dass ein ungehindertes Abwälzen der Lagerkugeln (5) ermöglicht ist.

6. Radial-Axial-Lagereinheit nach Anspruch 4, **dadurch gekennzeichnet, dass** der Scheibenkäfig (6) auf einer Welle geführt ist.

7. Radial-Axial-Lagereinheit nach Anspruch 4, **dadurch gekennzeichnet, dass** der Scheibenkäfig (6) mit Schmiertaschen in Form von Einprägungen (7) oder Durchbrüchen (8) versehen ist.

8. Radial-Axial-Lagereinheit nach Anspruch 1, **dadurch gekennzeichnet, dass** sie in einem Planetenradsatz zur Lagerung von Planeten (22) eingesetzt ist, deren Achsen (15) gegenüber einer Zentralachse (21) entweder parallel oder unter einem Winkel verlaufen.

## Claims

1. Radial-axial bearing unit having a cylindrical roller bearing (1) which absorbs radial forces and has at least one outer ring (10), and having a ball bearing which absorbs axial forces, the cylindrical rollers (13) and the bearing balls (5) being guided in each case in a cage, **characterized in that** the ball bearing is configured as an angular-contact ball bearing (2), the outer ring (3) of which has an axially oriented collar (9) at its radially inward lying end, which collar (9) forms a first bearing surface for an end side of the cylindrical rollers (13), and the cylindrical roller bearing (1) has a thrust washer (11), the radial part of which is in direct contact with the end face of the outer ring (10) and the axially oriented collar (12) of which forms a second bearing face for the other end side of the cylindrical rollers (13).

2. Radial-axial bearing unit according to Claim 1, **characterized in that** the end sides of the cylindrical rollers (13) are of spherical configuration and are in contact with the axially oriented collars (9, 12) in the pitch-circle region.

3. Radial-axial bearing unit according to Claim 1, **characterized in that** the cage (14) of the cylindrical roller bearing (1) is guided by its outer track.

4. Radial-axial bearing unit according to Claim 1, **characterized in that** the axial extent of the bearing rings (3, 4) of the angular-contact ball bearing (2) is limited in such a way that a plate cage (6) which can accommodate the bearing balls (5) can be arranged between the said bearing rings (3, 4).

5. Radial-axial bearing unit according to Claim 4, **characterized in that** pockets (19) of the plate cage (6) have such a geometry that unimpeded rolling of the bearing balls (5) is made possible.

6. Radial-axial bearing unit according to Claim 4, **characterized in that** the plate cage (6) is guided on a shaft.

7. Radial-axial bearing unit according to Claim 4, **characterized in that** the plate cage (6) is provided with lubrication pockets in the form of embossed portions (7) or apertures (8).

8. Radial-axial bearing unit according to Claim 1, **characterized in that** it is inserted into a planetary gear set for mounting planets (22), the axes (15) of which extend either in parallel or at an angle to a central axis (21).

## Revendications

1. Ensemble formant palier radial et axial comportant un roulement à rouleaux cylindriques (1) reprenant des efforts radiaux et présentant au moins une bague extérieure (10), et un roulement à billes reprenant des efforts axiaux, les rouleaux cylindriques (13) et les billes de roulement (5) étant chacun guidés dans une cage, **caractérisé en ce que** le roulement à billes est conformé comme un roulement à billes oblique (2) dont la bague extérieure (3) présente à son extrémité située radialement à l'intérieur une collerette (9) orientée axialement qui forme une première surface d'application pour une face frontale des rouleaux cylindriques (13) et **en ce que** le roulement à rouleaux cylindriques (1) présente un disque de démarrage (11) qui est directement adjacent à la surface frontale de la bague extérieure (10) par sa partie radiale et dont la collerette (12) orientée axialement forme une deuxième surface d'application pour l'autre face frontale des rouleaux cylindriques (13).

2. Ensemble formant palier radial et axial selon la revendication 1, **caractérisé en ce que** les faces frontales des rouleaux cylindriques (13) sont exécutées de façon bombée et **en ce que** celles-ci sont adjacentes aux collerettes (9,12) orientées axialement dans la zone du cercle primitif.

3. Ensemble formant palier radial et axial selon la revendication 1, **caractérisé en ce que** la cage (14) du roulement à rouleaux cylindriques (1) est guidée par son chemin de roulement extérieur.

4. Ensemble formant palier radial et axial selon la revendication 1, **caractérisé en ce que** les bagues de roulement (3,4) du roulement à billes oblique (2) sont limitées sur le plan de leur étendue axiale de façon à ce qu'une cage à disque (6) logeant les billes de roulement (5) puisse être disposée entre elles.

5. Ensemble formant palier radial et axial selon la revendication 4, **caractérisé en ce que** des poches (19) de la cage à disque (6) présentent une telle géométrie qu'une rotation libre des billes de roulement (5) est possible.

6. Ensemble formant palier radial et axial selon la revendication 4, **caractérisé en ce que** la cage à disque (6) est guidée sur un arbre.

7. Ensemble formant palier radial et axial selon la revendication 4, **caractérisé en ce que** la cage à disque (6) est pourvue de poches de lubrification sous forme d'empreintes (7) ou de perforations (8).

8. Ensemble formant palier radial et axial selon la revendication 1, **caractérisé en ce qu'**il est utilisé dans un jeu de roues planétaires afin de loger des planètes (22) dont les axes (15) s'étendent soit parallèlement soit sous un angle par rapport à un axe central (21).
